# EUROPEAN PATENT APPLICATION

(11) **EP 3 536 726 A1**
(43) Date of publication of application: **11.09.2019**
(21) Application number: 18160351.5
(22) Date of filing: 06.03.2018
(51) Int. Cl.: C08G 18/73, C08F 283/00, C08G 18/08, C09J 175/04, C08G 18/70

(54) **COATED PRODUCT OR ARTICLE AND METHOD FOR MANUFACTURING THE SAME**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a coated product and a method for manufacturing the same. The method comprises the following steps: coating at least one surface of a substrate with a composition comprising a polymer, a compound which can polymerize by free radical polymerization, a photoinitiator and optional water, the amount of the polymer is no less than 50 wt%, based on that the solids content of the composition is 100 wt%, the polymer being one or more selected from: polyurethane, polyurea and polyurethane polyurea; heating and drying the substrate surface coated with the composition; irradiating the heated and dried substrate surface with actinic radiation, the dosage of the actinic radiation is between 1250 mJ/cm² and 1950 mJ/cm²; and bringing the irradiated substrate surface into contact with the substrate itself or an additional substrate, to give the coated product. The present application also relates to a coated aritcle and a method for manufacturing the same. The method provided by the present invention is simple in process, while provides good adhesion to substrates, especially to those having difficulties in bonding.

## Description

### Technical Field

The present invention relates to a method for manufacturing a coated product and the coated product obtained therefrom. It further relates to a method for manufacturing a coated article and the coated article obtained therefrom.

### Background Art

An adhesive containing a polymer dispersion usually displays good adhesion to some substrates after being activated by heat and the bonding process is simple and fast, especially a waterborne polymer dispersion only releases negligible amount of volatile organic such as a solvent. However, an adhesive containing a polymer dispersion, especially a waterborne polymer dispersion has the disadvantage that it has very poor adhesion to conventional materials in soles or midsoles in the shoe-making industry such as EVA and rubber.

Therefore, in the shoe-making industry, adhesion of the adhesive containing a polymer dispersion to a material to be bonded is improved by pretreatments to the material. Methods for pretreatment include chlorination, ozone, plasma or using primers containing an aggressive organic solvent. Reference may be made to J. Adhesion Sci. Technol., Vol. 19, No. 1, pp. 19-40 (2005). The above pretreatments not only complicate the operational process, but also require chemicals which are detrimental to people and environment.

US2013/273375 discloses a bonding method which needs no pretreatment to substrate. The method includes applying a dispersion comprising a polymer, a component which can polymerize by free radical polymerization, a photoinitiator, and a cross-linker to a surface of EVA or rubber; removing water; irradiating with actinic radiation to give a film; introducing heat to the film and then bonding EVA or rubber with other material. In the method, heat is required to be introduced to the film formed by irradiating with actinic radiation, which not only raises the requirements for resistance to deformation of EVA or rubber, but also complicates the process.

Therefore, there is a need in the industry to find a bonding method which is simple in process and suitable for substrates that have difficulties in bonding such as soles or midsoles in the shoe-making industry.

### Summary of the Invention

An objective of the present invention is to provide a method for manufacturing a coated product/article and the coated product/article obtained therefrom.

The method for manufacturing a coated product according to the present invention comprises the following steps:
(S1) coating at least one surface of a substrate with a composition A comprising a polymer A, a compound which can polymerize by free radical polymerization, a photoinitiator and optional water, the amount of the polymer A is no less than 50 wt%, based on that the solids content of the composition A is 100 wt%, the polymer A being one or more selected from: polyurethane, polyurea and polyurethane polyurea;
(S2) heating and drying the substrate surface coated with the composition A;
(S3) irradiating the heated and dried substrate surface with actinic radiation, the dosage of the actinic radiation is between 1250 mJ/cm² and 1950 mJ/cm²; and
(S4) bringing the irradiated substrate surface into contact with the substrate itself or an additional substrate, to give the coated product.

According to one embodiment of the present invention, it provides a coated product prepared by performing the method provided by the present invention.

The method for manufacturing a coated article comprises the following steps:
(S1) coating at least one surface of a substrate with a composition B comprising a polymer B, a compound which can polymerize by free radical polymerization, a photoinitiator and optional water, the amount of the polymer B is no less than 50 wt%, based on that the solids content of the composition B is 100 wt%, the polymer B being one or more selected from: polyurethane, polyurea and polyurethane polyurea; the polymer B having an enthalpy of fusion of no more than 3 J/g at 20-100°C, obtained by measuring the first heating curve at a heating rate of 20 K/min by DSC according to DIN 65467;
(S2) heating and drying the substrate surface coated with the composition B;
(S3) irradiating the heated and dried substrate surface with actinic radiation, and
(S4) bringing the irradiated substrate surface into contact with the substrate itself or an additional substrate, to give the coated article.

According to one embodiment of the present invention, there provides a coated article prepared by performing the method provided by the present invention.

Through selecting suitable dosages of actinic radiation, on the one hand, adhesion of the composition to a substrate, especially that having difficulties in bonding, for example the conventional material used in soles or midsoles such as EVA and rubber in the shoe-making industry have been improved; on the other hand, no extra heat is needed before allowing the substrate to contact with the substrate itself or an additional substrate and bond, thus the present invention simplifes the process and equipments required by the method and shortens the time required to manufacture the coated product/article.

With the method of the present invention, pretreatments to substrates may be omitted which include, for example, treatments with primers, high-energy radiation or ozone, thus the present invention simplifies the process and equipments required by the method and shortens the time required to manufacture the coated product/article.

There is no requirement for the enthalpy of fusion of the polymer comprised in the composition. However, when the polymer has an enthalpy of fusion of no more than 3 J/g at 20 - 100 °C obtained by measuring the first heating curve at a heating rate of 20 K/min by DSC according to DIN 65467, the composition will have a better adhesion to substrates, especially those having difficulties in bonding.

Therefore, the present invention actually has provided a method for manufacturing a coated product or article which is simple in process, energy saving and has good adhesion to substrates, especially those having difficulties in bonding, without a need for any pretreatment to substrates or an extra heating step subsequent to actinic radiation.

### Detailed Description of the Invention

The present invention relates to a method for manufacturing a coated product, comprising the following steps:
(S1) coating at least one surface of a substrate with a composition A comprising a polymer A, a compound which can polymerize by free radical polymerization, a photoinitiator and optional water, the amount of the polymer A is no less than 50 wt%, based on that the solids content of the composition A is 100 wt%, the polymer A being one or more selected from: polyurethane, polyurea and polyurethane polyurea;
(S2) heating and drying the substrate surface coated with the composition A;
(S3) irradiating the heated and dried substrate surface with actinic radiation, the dosage of the actinic radiation is between 1250 mJ/cm² and 1950 mJ/cm²; and
(S4) bringing the irradiated substrate surface into contact with the substrate itself or an additional substrate, to give the coated product,
and the present invention also provides a coated product prepared by the method of the present invention.

### Composition A

The composition A is preferably an adhesive.

### Polymer A

The polymer A has an enthalpy of fusion of more than 3 J/g at 20-100°C, obtained by measuring the first heating curve at a heating rate of 20 K/min by DSC according to DIN 65467.

The content of the polymer A is preferably 50.0-95 wt%, most preferably 70-94 wt%, based on that the solids content of the composition A is 100 wt%.

The content of the polymer A according to the present invention refers to solids content.

The polyurethane, polyurea and polyurethane polyurea may be obtained by reacting a system comprising the following components:
A) a polyol;
B) a polyisocyanate having a functionality of isocyanate group no less than 2;
C) a compound comprising at least one hydrophilizing group;
D) optionally, a mono-, di- and/or trifunctional amine compound and/or a mono-, di- and/or trifunctional hydroxylamine compound; and
E) optionally, other isocyanate reactive compounds.

The polyol preferably has no less than 2 hydroxyl groups, further preferably 2-4, particularly preferably 2-3 and most preferably 2 hydroxyl groups.

The polyol preferably has an average molecular weight of 62-18000 g/mol, further preferably of 62-4000 g/mol.

The polyol may be one or more selected from: polyether polyols, polyester polyols, polycarbonate polyols, polylactone polyols and polyamide polyols.

The polyester polyols are preferably linear polyester diols or indeed weakly branched polyester polyols, as can be prepared in a known manner from aliphatic, cycloaliphatic or aromatic di- or polycarboxylic acids with low-molecular-weight alcohols.

The aliphatic, cycloaliphatic or aromatic di- or polycarboxylic acid may be succinic, methylsuccinic, glutaric, adipic, pimelic, suberic, azelaic, sebacic, nonanedicarboxylic, decanedicarboxylic, terephthalic, isophthalic, o-phthalic, tetrahydrophthalic, hexahydrophthalic, cyclohexane dicarboxylic, maleic, fumaric, malonic, trimellitic acid and acid anhydride, mostly preferably adipic acid.

The polycarboxylic acids may be replaced with corresponding polycarboxylic acid anhydrides or corresponding polycarboxylic acid esters of low alcohols or combinations thereof.

The linear dicarboxylic acids and/or derivatives thereof, such as anhydrides, esters or acid chlorides and aliphatic or cycloaliphatic, linear or branched polyols may be present in an amount of no less than 80 mol%, preferably 85-100 mol% and most preferably 90-100 mol%, based on that the total amount of the aliphatic, cycloaliphatic or aromatic di- or polycarboxylic acids is 100 mol%.

The low-molecular-weight alcohols may be one or more selected from: ethanediol, di-, tri-, tetraethylene glycol, 1,2-propanediol, di-, tri-, tetrapropylene glycol, 1,3-propanediol, butanediol-1,4, butanediol-1,3, butanediol-2,3, pentanediol-1,5, hexanediol-1,6, 2,2-dimethyl-1,3-propanediol, 1,4-dihydroxycyclohexane, 1,4-dimethylol cyclohexane, octanediol-1,8, decanediol-1,10, dodecanediol-1,12, trimethylol propane, glycerine, pentaerythritol and cycloaliphatic, aromatic di- or polyhydroxy compounds.

The polyester polyols are preferably obtained by the addition of lactone or lactone combinations, such as butyrolactone, ε-caprolactone and/or methyl-ε-caprolactone, to suitable di- and/or higher-functional starter molecules.

The polycarbonate polyols can be prepared by reacting diols such as 1,4-butanediol and/or 1,6-hexanediol with diaryl carbonates, dialkyl carbonates or phosgene.

The polycarbonate polyols may improve resistance to hydrolysis of the composition.

The polyether polyols may be for example the polyaddition products of styrene oxides, alkylene oxides, tetrahydrofuran or epichlorohydrin, and mixed addition and grafting products thereof.

The polyether polyols are preferably the homopolymers, mixed polymers and graft polymers of the alkylene oxides which are obtained by the addition of the said alkylene oxides to low-molecular-weight alcohols, such as those mentioned in the preparation of polyester polyols, or to higher-functional low-molecular-weight alcohols such as pentaerythritol or sugar, or to water.

The alkylene oxide is preferably ethylene oxide and/or propylene oxide.

The component A) may further comprise a compound having a molecular weight of 62-400 g/mol.

The compound having a molecular weight of 62-400 g/mol may be one or more selected from: ethanediol, propanediol, butanediol, pentanediol, hexanediol, 2,2-dimethyl-1,3-propanediol, 1,4-dihydroxycyclohexane, 1,4-dimethylol cyclohexane, 1,8-octanediol, 1,10-decanediol, 1,12-dodecanediol, neopentyl glycol, 1,4-cyclohexane diol, 1,4-cyclohexane dimethanol, 1,4-, 1,3-, 1,2-dihydroxybenzene, 2,2-bis-(4-hydroxyphenyl)-propane (bisphenol A), TCD-diol, trimethylol propane, glycerine, pentaerythritol and dipenthaerythritol.

The content of component A) may be 20-95 wt%, preferably 30-90 wt% and most preferably 65-90 wt%, based on that the amount of polymer A is 100 wt%.

The component B), i.e. polyisocyanate having a functionality of no less than 2 is preferably the one with the following general formula I:

Y(NCO)₂ (I),

wherein, Y may be one or more selected from: a divalent aliphatic hydrocarbon radical having 4-12 carbon atoms, a divalent cycloaliphatic hydrocarbon radical having 6-15 carbon atoms; a divalent aromatic hydrocarbon radical having 6-15 carbon atoms and a divalent araliphatic hydrocarbon radical having 7-15 carbon atoms.

The polyisocyanate of general formula I is preferably one or more selected from: tetramethylene diisocyanate, pentamethylene diisocyanate, hexamethylene diisocyanate, dodecamethylene diisocyanate, 1,4-diisocyanatocyclohexane, isophorone diisocyanate, 4,4'-diisocyanato-dicyclohexyl-methane, 4,4'-diisocyanato-2,2-dicyclohexylpropane-(2,2), 1,4-diisocyanatobenzene, 2,4-diisocyanatotoluene, 2,6-diisocyanatotoluene, 4,4'-diisocyanatodiphenylmethane, 2,2'- and 2,4'-diisocyanato-diphenylmethane, tetramethyl xylylene diisocyanate, p-xylylene diisocyanate and p-isopropylidene diisocyanate.

The polyisocyanate of general formula I is further preferably one or more selected from: hexamethylene diisocyanate, dodecamethylene diisocyanate, 1,4-diisocyanatocyclohexane, isophorone diisocyanate, 4,4'-diisocyanato-dicyclohexyl-methane, 2,4-diisocyanatotoluene, 2,6-diisocyanatotoluene, 4,4'-diisocyanatodiphenylmethane, 2,2'- and 2,4'-diisocyanato-diphenylmethane.

The polyisocyanate of general formula I is most preferably hexamethylene diisocyanate.

The component B), i.e. polyisocyanate having a functionality of no less than 2 may also be the one which contains hetero atoms in the radical linking the isocyanate group, for example the polyisocyanate which is obtained by modifying aliphatic, cycloaliphatic, araliphatic and/or aromatic diisocyanate with a uretdione, isocyanurate, urethane, allophanate, biuret, carbodiimide, iminooxadiazinedione and/or oxadiazinetrione structure.

The component B), i.e. polyisocyanate having a functionality of no less than 2 may also be the one having a functionality of more than 2 isocyanate groups in each molecule, e.g., nonane triisocyanate.

The content of component B) may be 5-60 wt%, preferably 6-45 wt% and most preferably 7-25 wt%, based on that the amount of polymer A is 100 wt%.

The component C), i.e. a compound comprising at least one hydrophilizing group may be present in its salt, or it is also possible to add a neutralizing agent needed to form the salt in portions or in its entirety only during or after the preparation of polymer A.

The component C), i.e. a compound comprising at least one hydrophilizing group may be a compound containing a sulfonate group or a carboxylate group.

The compound containing a sulfonate group and/or a carboxylate group may be a diamine compound and/or a dihydroxyl compound which contains a sulfonate group and/or a carboxylate group, such as the sodium, lithium, potassium, *t*-amine salt of N-(2-aminoethyl)-2-aminoethane sulfonic acid, N-(3-aminopropyl)-2-aminoethane sulfonic acid, N-(3-aminopropyl)-3-aminopropane sulfonic acid, N-(2-aminoethyl)-3-aminopropane sulfonic acid, analogous carboxylic acids, dimethylol propionic acid, dimethylol butyric acid, the reaction product from a Michael addition of 1 mol of diamine such as 1,2-ethane diamine or isophorone diamine with 2 mol of acrylic acid or maleic acid.

The *t*-amine in the *t*-amine salt may be one or more selected from: triethylamine, dimethyl cyclohexylamine and ethyl diisopropylamine.

The component C), i.e. a compound comprising at least one hydrophilizing group may further be a mono- or difunctional polyether which has a non-ionic hydophilizing action and is based on an ethylene oxide polymer or an ethylene oxide/propylene oxide copolymer started from an alcohol or an amine, such as polyether or methoxypolyethylene glycol.

The component C) is most preferably one or more selected from: N-(2-aminoethyl)-2-aminoethane sulfonate and the salts of dimethylol propionic acid and dimethylol butyric acid.

The content of the component C) may be 0.1-15 wt%, preferably 0.5-10 wt%, further preferably 0.8-5 wt% and most preferably 0.9-3.0 wt%, based on that the amount of polymer A is 100 wt%.

The component D), i.e. mono-, di- and/or trifunctional amine compound may be an aliphatic and/or alicyclic primary and/or secondary monoamine, such as one or moreselected from: ethylamine, diethylamine, isomeric propyl amine, butyl amine and cyclohexylamine.

The component D), i.e. mono-, di- and/or trifunctional hydroxylamine compound may also be an amino alcohol. The amino alcohol may be one or more selected from: ethanolamine, N-methyl ethanolamine, diethanolamine, diisopropanolamine, 1,3-diamino-2-propanol, N-(2-hydroxyethyl)-ethylene diamine, N,N-bis(2-hydroxyethyl)-ethylene diamine, 2-propanolamine, 1,2-ethane diamine, 1,6-hexamethylene diamine, isophorone diamine, piperazine, 1,4-diamino cyclohexane, bis-(4-aminocyclohexyl)-methane and diethylene triamine. Preferably, the amino alcohol may be one or more selected from: 1,2-ethane diamine, 1-amino-3,3,5-trimethyl-5-aminomethyl cyclohexane, diethylene triamine, diethanolamine, ethanolamine, N-(2-hydroxyethyl)-ethylene diamine and N,N-bis(2-hydroxyethyl)-ethylene diamine.

The component D), i.e. mono-, di- and/or trifunctional hydroxylamine compound may also be one or more selected from: adipic acid dihydrazide, hydrazine and hydrazine hydrate.

The content of the component D) may be 0-10 wt%, preferably 0-5 wt% and most preferably 0.2-3 wt%, based on that the amount of polymer A is 100 wt%.

The component E) may be an aliphatic, cycloaliphatic or aromatic monoalcohol having 2-22 carbon atoms, such as one or more selected from: ethanol, butanol, hexanol, cyclohexanol, isobutanol, benzyl alcohol, stearyl alcohol, 2-ethyl ethanol and cyclohexanol.

The component E) may further be an blocking agent which is conventional for isocyanate groups and may be split again at an elevated temperature, such as one or more selected from: butanone oxime, dimethylpyrazole, caprolactam, malonic esters, triazole, dimethyl triazole, *t*-butylbenzyl amine and cyclopentanone carboxyethyl ester.

The content of the component E) may be 0-20 wt% and most preferably 0-10 wt%, based on that the amount of polymer A is 100 wt%.

### Waterborne Polymer Dispersion A

The waterborne polymer dispersion A may be formed from polymer A and water.

The waterborne polymer dispersion A may be one or more selected from: waterborne polyurethane dispersions, waterborne polyurea dispersions and waterborne polyurethane polyurea dispersions.

The solids content of the waterborne polymer dispersion A may be 15-70 wt%, preferably 25-60 wt% and mostly preferably 30-50 wt%, based on that the amount of the waterborne polymer dispersion A is 100 wt%.

The pH value of the waterborne polymer dispersion A is preferably 4-11, most preferably 6-10.

The waterborne polymer dispersion A may be prepared as follows:
firstly, some or all of the component A), component B), optional component C) and optional component E) are added to a reactor, optionally in the presence of a solvent which is miscible with water but inert to isocyanate groups, and heated to 50-120 °C; then any one or more of the component A), component B), optional component C) and optional component E) which are not added at the beginning of the reaction are added to form an isocyanate-functional prepolymer;
secondly, the chain of isocyanate-functional prepolymer is extended with component C) and optional component D) at 15-60 °C, preferably at 25-55 °C and most preferably at 40-50 °C, to give the polymer A; the mixture is turned into an aqueous phase and optional solvents are removed before, during or after chain-extension of the prepolymer; and
thirdly, steps of dispersing, emulsifying or dissolving are carried out following partial or complete chain extension.

Dispersion of polyurethane, polyurea or polyurethane polyurea may be carried out in a homogenous phase in one or more steps or in the case of a multi-step reaction, partly in a disperse phase.

After the third step, a further chain extension or modification may be carried out optionally.

The solvent used in the first step may be one or more selected from: acetone, butanone, tetrahydrofuran, dioxan, acetonitrile, dipropylene glycol dimethyl ether and 1-methyl-2-pyrrolidone; preferably butanone or acetone and particularly preferably acetone. The solvent may be added only at the beginning of preparation or also later in portions.

The NCO value of the isocyanate-functional prepolymer in the first step is 1.05 - 2.5 and preferably 1.1 - 1.5. The content of isocyanate group in the prepolymer may be 0.3 - 3.0 wt%, preferably 0.7 - 1.5 wt% and most preferably 0.9 - 1.5 wt%.

In the first step, the reaction of component A), component B) and optional component C) and component E) occurs partially or completely, preferably completely. The degree of reaction is monitored by the content of isocyanate group in the first step. Infrared or near infrared spectrascopy may be employed as the monitoring method.

A catalyst may be incorporated in the first step in order to accelerate the reaction. The catalyst may be one or more selected from: triethylamine, 1,4-diazabicyclo-[2,2,2]-octane, dibutyltin oxide, tin dioctoate, dibutyltin dilaurate, tin-bis-(2-ethyl hexanoate) and other organometallic compounds.

The chain extension of the prepolymer may be carried out before, during or after dispersion, preferably before dispersion.

The prepolymer may be dispersed into water, optionally under pronounced shear, such as vigorous stirring, or water is added into the prepolymer to disperse it. Then the chain extension is carried out, unless this has already been done in a homogeneous phase.

The organic solvent present in the waterborne polymer dispersion A, such as acetone, may be removed by distillation. The organic solvent may be removed during or after the formation of the waterborne polymer dispersion A.

The amount of the residual organic solvent in the waterborne polymer dispersion A is preferably less than 1.0 wt%, based on that the amount of the waterborne polymer dispersion A is 100 wt%.

The waterborne polymer dispersion A may be prepared by any methods known from the prior art, such as the emulsifier/shear force method, acetone method, prepolymer mixing method, melting/emulsifying method, ketimine method, spontaneous dispersion of solids method, or derivatives thereof, preferably the melting/emulsifying method, prepolymer mixing method or acetone method, most preferably the acetone method.

The waterborne polymer dispersion A may be used alone or together with the additives known from coatings and adhesives technology.

The additive may be one or more selected from: UV absorbers, sterically hindered amines, antioxidants, anti-sedimentation agents, defoaming agents, wetting agents, levelling agents, reactive diluents, plasticizers, neutralizing agents, catalysts, cosolvents, pigments, dyes and matting agents. The additives may be added to the waterborne polymer dispersion A directly. However, it is also possible to add at least a portion of the additives in advance before or during dispersion in the preparation of the dispersion. The selection and metering of an additive are known to those skilled in the art.

The waterborne polymer dispersion A may further have ethylenically unsaturated double bonds.

The ethylenically unsaturated double bonds may be introduced into the waterborne polymer dispersion A by using appropriate proportions of hydroxy-functional components A), C) or E) which have acrylate and/or methacrylate groups in the preparation of the waterborne polymer dispersion A.

The ethylenically unsaturated double bonds may be introduced into the waterborne polymer dispersion A by using appropriate proportions of hydroxy-functional compounds which have acrylate and/or methacrylate groups in the preparation of the waterborne polymer dispersion A.

### Compound Which Can Polymerize by Free Radical Polymerization

The content of the compound which can polymerize by free radical polymerization may be 5-40 wt%, preferably 8-40 wt% and most preferably 12-30 wt%, based on that the solids content of the composition A is 100 wt%.

The compound which can polymerize by free radical polymerization may be an ethylenically unsaturated compound.

The ethylenically unsaturated compound is preferably one or more selected from: esters of acrylic acid, esters of methacrylic acid, esters of crotonic acid, vinyl esters, vinyl ethers and vinyl-aromatic compounds, further preferably selected from esters of acrylic acid and/or esters of methacrylic acid, still preferably selected from those having a functionality of acrylic and/or methacrylic acid groups of 2 or less.

The vinyl ester is preferably the vinyl ester of a carboxylic acid having 1 to 20 carbon atoms and is most preferably one or more selected from: vinyl laurate, vinyl stearate, vinyl propionate, vinyl neodecanoate and vinyl acetate.

The vinyl ether may be the vinyl ether of an alcohol having 1 to 4 carbon atoms and most preferably vinyl methyl ether and/or vinyl isobutyl ether.

The vinyl-aromatic compound may be one or more selected from: vinyl toluene, o-methyl styrene, p-methyl styrene, o-butyl styrene, 4-*n*-butyl styrene and 4-*n*-decyl styrene.

The ethylenically unsaturated compound particularly preferably comprises aromatic or cycloaliphatic groups and has a molecular weight of less than 500 g/mol, such as one or more selected from: phenoxyethyl (meth)acrylate, phenoxy(ethoxy) ethyl (meth)acrylate, in particular bisphenol A ethoxylate ethyl (meth)acrylate, cyclohexyl (meth)acrylate, isomeric *t*-butyl cyclohexyl (meth)acrylates, norbornyl, isobornyl, dicyclopentadienyl or tetrahydrofurfuryl (meth)-acrylate, cyclic trimethylolpropane formal (meth)acrylate and tricyclodecane dimethanol di(meth)-acrylate; most preferably one or more selected from: tetrahydrofuran (meth)acrylate, tricyclodecane dimethanol di(meth)acrylate and dicyclopentadienyl (meth)acrylate.

### Photoinitiator

The content of the photoinitiator may be 0.1 - 10 wt%, more preferably 0.5 - 8.0 wt% and most preferably 1.0 - 4.5 wt%, based on that the solids content of the composition A is 100 wt%.

The photoinitiator is an initiator which may be activated by actinic radiation and initiate free radical polymerization of a monomer which can polymerize by free radical polymerization, especially of an ethylenically unsaturated compound.

The photoinitiator may be a unimolecular initiator and/or a bimolecular initiator.

The unimolecular initiator may be aromatic ketone compound, which may be one or more selected from: benzophenones combined with tertiary amines, alkylbenzophenones, 4,4'-bis(di-methylamino)benzophenone, anthrone and halogenated benzophenones.

The bimolecular initiator may be one or more selected from: benzoin and its derivatives, benzilketals and acylphosphine oxides.

The actinic radiation may be UV light or visible light.

The actinic radiation may have a wavelength of 200 - 750 nm, preferably of 200 - 600 nm and most preferably of 200 - 500 nm.

The compound which can polymerize by free radical polymerization and the photoinitiator may be incorporated alone or together during or after the preparation of the polymer A, as a solvent and emulsified with the polymer A in water to form an emulsion. If the compound which can polymerize by free radical polymerization or photoinitiator has functional groups that may participate in the reaction during the preparation of the polymer A, it may be added only after synthesis of the polymer A.

When the photoinitiator is a solid, the compound which can polymerize by free radical polymerization is preferably selected from those may be used as solvents for the photoinitiator.

### Substrate

Before the substrate is coated with the composition A, it preferably undergoes no treatments with primers, high-energy radiation or ozone.

The high-energy radiation may be ionizing radiation, especially plasma.

Before the composition A is coated onto at least one surface of the substrate, the substrate may undergo pretreatments by washing or mechanical intervention, in order to clean its surfaces and remove dust, dirt, grease and any adhered release agents resulted from preparation of the substrate from the surfaces. For washing, solvents such as aqueous cleaning solutions may be used. The mechanical intervention may be wiping, brushing or ultrasonic treatment.

The substrate may be any substrate to be bonded, preferably a substrate with poor adhesion.

The substrate may be made from one or more materials selected from: ethylene vinyl acetate copolymers (EVA), rubber, polyolefins, thermoplastic polyurethane and polyurethane foam.

The substrate is most preferably made from ethylene vinyl acetate copolymers and/or rubber.

The ethylene vinyl acetate copolymers are preferably those having low vinyl acetate content, e.g., Phylon, compression moulded EVA or die cut EVA.

The rubber is preferably one or more selected from: styrene-butadiene rubber, nitrile-butadiene rubber, thermoplastic rubber, natural rubber and ethylene-propylene-diene rubber.

The additional substrate is the same as or different from the substrate.

### Method for Coating Product

The coating may be applying the composition A to the entire surface or only to one or more parts of the surface of the substrate.

The coating may be brush coating, dip coating, spray coating, roller coating, blade coating, flow coating, casting, printing or transfer printing, preferably brushing coating, dip coating or spray coating.

The coating should exclude use of radiation, which may result in premature reaction of the photoinitiators in the composition A or polymerization of the double bonds.

The heating and drying the substrate surface coated with composition A may refer to only heating and drying the substrate surface, but also refer to heating and drying part or all of the substrate including the substrate surface coated with composition A.

The heating and drying may remove volatile components, which may be water.

The heating and drying may be conducted via one or more means selected from: infrared thermal radiation, near infrared thermal radiation, microwaves and convection ovens or spray driers at elevated temperatures.

Generally, the higher the heating temperature is, the better. However, the termperature should never be higher than the threshold at which the substrate deforms in an uncontrolled manner or undergoes other damages.

The irradiating with actinic radiation is carried out when the temperature of the heated and dried substrate surface is no lower than 35 °C, and is most preferably carried out immediately after the heating and drying.

The irradiating the heated and dried substrate surface with actinic radiation may refer to only irradiating the heated and dried substrate surface, but also refer to irradiating part or all of the substrate including the heated and dried substrate surface.

The actinic radiation crystallizes and solidifies the composition A.

The actinic radiation may be UV radiation, solar radiation, radiation with the exclusion of oxygen under inert gas or oxygen-depleted gas or radiation by covering the parts to be radiated with media which are transparent to radiation, preferably UV radiation or solar radiation.

The inert gas is preferably nitrogen or carbon dioxide. The media which are transparent to radiation are preferably synthetic films, glass or liquids such as water.

The UV radiation or solar radiation may be performed with a medium- or high-pressure mercury vapor lamp. Optionally, the mercury vapor can be modified by doping with other elements such as gallium or iron. Laser, pulsed lamps, halogen lamps or excimer radiation means may also be used.

The actinic radiation is most preferably UV radiation. The UV radiation is most preferably a mercury radiation installed in a fixed location.

When the substrate has three-dimensional surfaces of complex shape, it is preferable to radiate using a plurality of radiation means, which should be suitably disposed such that the substrate surfaces receive a uniform radiation.

The radiation dosage of the actinic radiation is between 1250 mJ/cm² and 1950 mJ/cm², within such range, the higher the radiation dosage is, the better. However, the radiation dosage should never be higher than the threshold at which the substrate deforms in an uncontrolled manner or undergoes other damages.

The contact is preferably carried out before the temperature of the irradiated substrate surface has been lowered below the temperature that the composition A may bond, further preferably before the temperature of the irradiated substrate surface is no lower than 60 °C. The irradiated substrate surface preferably contacts with the substrate itself or an additional substrate in 1 hour, further preferably in 30 minutes, more preferably in 10 minutes and most preferably in 5 minutes, to give the coated product.

The additional substrate may be any substrate to be bonded.

The additional substrate may be the same as or different from the substrate.

The additional substrate preferably undergoes coating, heating and treatments with actinic radiation as the substrate.

The additional substrate preferably undergoes no treatments with primers, high-energy radiation or ozone before contacting with the irradiated substrate surface.

The high-energy radiation may be ionizing radiation, especially plasma.

The irradiated substrate surface may also undergo further thermal treatments after contacting with the substrate itself or the additional substrate.

The irradiated substrate surface may also undergo further cooling treatments after contacting with the substrate itself or the additional substrate, lowering the temperature of the coated product to room temperature.

After the step of irradiating with actinic radiation and before bringing the irradiated substrate surface into contact with the substrate itself or the additional substrate, heat may be further introduced to the irradiated substrate surface with actinic radiation. Methods for introducing heat may be one or more selected from: convection ovens or spray driers at elevated temperatures, infrared thermal radiation, near infrared thermal radiation, microwaves and heat transfer by the object contacting with the substrate coated with the composition A of the present invention.

After the step of irradiating with actinic radiation and before bringing the irradiated substrate surface into contact with the substrate itself or the additional substrate, preferably no heat is needed to be introduced to the irradiated substrate surface with actinic radiation.

### Coated Product

The coated products may be shoes, sports items, furniture, textiles, foils and composites thereof, electronic products, automotive vehicles and internal parts thereof or aircrafts and internal parts thereof.

The coated products are preferably shoes, most preferably sports shoes.

The present invention further provides a method for manufacturing a coated article, comprises the following steps:
coating at least one surface of a substrate with a composition B comprising a polymer B, a compound which can polymerize by free radical polymerization, a photoinitiator and optional water, the amount of the polymer B is no less than 50 wt%, based on that the solids content of the composition B is 100 wt%, the polymer B being one or more selected from: polyurethane, polyurea and polyurethane polyurea; the polymer B having an enthalpy of fusion of no more than 3 J/g at 20-100 °C, obtained by measuring the first heating curve at a heating rate of 20 K/min by DSC according to DIN 65467;
heating and drying the substrate surface coated with the composition B;
irradiating the heated and dried substrate surface with actinic radiation, and
bringing the irradiated substrate surface into contact with the substrate itself or an additional substrate, to give the coated article.

### Composition B

The composition B is preferably an adhesive.

### Polymer B

The content of the polymer B may be 50.0 - 95 wt% and most preferably 70 - 94 wt%, based on that the solids content of the composition B is 100 wt%.

The content of the polymer B of the present invention refers to solids content.

### Waterborne Polymer Dispersion B

The waterborne polymer dispersion B may be formed from the polymer B and water.

The waterborne polymer dispersion B may be one or more selected from: waterborne polyurethane dispersion, waterborne polyurea dispersion and waterborne polyurethane polyurea dispersion.

The solids content of the waterborne polymer dispersion B may be 15 - 70 wt%, preferably 25 - 60 wt% and most preferably 30 - 50 wt%, based on that the amount of the waterborne polymer dispersion B is 100 wt%.

The pH value of the waterborne polymer dispersion B is preferably 4 - 11, most preferably 6 -10.

The amount of the residual organic solvent in the waterborne polymer dispersion B is preferably less than 1.0 wt%, based on that the amount of the waterborne polymer dispersion B is 100 wt%.

The waterborne polymer dispersion B may be prepared by any methods known from the prior art, such as the emulsifier/shear force method, acetone method, prepolymer mixing method, melting/emulsifying method, ketimine method and spontaneous dispersion of solids method, or derivatives thereof, preferably the melting/emulsifying method, prepolymer mixing method and acetone method, most preferably the acetone method.

The waterborne polymer dispersion B may be used alone or together with the additives known from coatings and adhesives technology.

The additive may be one or more selected from: UV absorbers, sterically hindered amines, antioxidants, anti-sedimentation agents, defoaming agents, wetting agents, levelling agents, reactive diluents, plasticizers, neutralizing agents, catalysts, cosolvents, pigments, dyes and matting agents. The additives may be added to the waterborne polymer dispersion B directly. However, it is also possible to add at least a portion of the additives in advance before or during dispersion in the preparation of the dispersion. The selection and metering of an additive are known to those skilled in the art.

Compound Which Can Polymerize by Free Radical Polymerization The compounds which can polymerize by free radical polymerization are the same as those described in the method for manufacturing the coated product according to the present invention.

The content of the compound which can polymerize by free radical polymerization may be 5-40 wt%, preferably 8-40 wt% and most preferably 12 - 30 wt%, based on that the solids content of the composition B is 100 wt%.

### Photoinitiator

The content of the photoinitiator may be 0.1 - 10 wt%, preferably 0.5 - 8.0 wt% and most preferably 1.0 - 4.5 wt%, based on that the solids content of the composition B is 100 wt%.

The photoinitiator is an initiator which may be activated by actinic radiation and initiate free radical polymerization of a monomer which can polymerize by free radical polymerization, especially of an ethylenically unsaturated compound.

The photoinitiator may be a unimolecular initiator or a bimolecular initiator.

The unimolecular initiator may be aromatic ketone compound, which may be one or more selected from: benzophenones combined with tertiary amines, alkylbenzophenones, 4,4'-bis(di-methylamino)benzophenone, anthrone and halogenated benzophenones.

The bimolecular initiator may be one or more selected from: benzoin and its derivatives, benzilketals and acylphosphine oxides.

The actinic radiation may be UV light or visible light.

The actinic radiation may have a wavelength of 200 - 750 nm, preferably of 200 - 600 nm and most preferably of 200 - 500 nm.

The dosage of the actinic radiation may be no less than 80 mJ/cm², preferably 80 - 5000 mJ/cm², further preferably 200 - 2000 mJ/cm² and most preferably 1250 - 1950 mJ/cm².

The compound which can polymerize by free radical polymerization and the photoinitiator may be incorporated alone or together during or after the preparation of the polymer B, as a solvent and emulsified with the polymer B in water to form an emulsion. If the compound which can polymerize by free radical polymerization or photoinitiator has functional groups that can participate in the reaction during the preparation of the polymer B, it may be added only after synthesis of the polymer B.

When the photoinitiator is a solid, the compound which can polymerize by free radical polymerization is preferably selected from those may be used as solvents for the photoinitiator.

### Substrate

Before the substrate is coated with the composition B, it preferably undergoes no treatments with primers, high-energy radiation or ozone.

The high-energy radiation may be ionizing radiation, especially plasma.

Before the composition B is coated onto at least one surface of the substrate, the substrate may undergo pretreatments by washing or mechanical intervention, in order to clean its surfaces and remove dust, dirt, grease and any adhered release agents resulted from preparation of the substrate from the surfaces. For washing, solvents such as aqueous cleaning solutions may be used. The mechanical intervention may be wiping, brushing or ultrasonic treatment.

The substrate may be any substrate to be bonded, preferably a substrate with poor adhesion.

The substrate may be made from one or more materials selected from: ethylene vinyl acetate copolymers (EVA), rubber, polyolefins, thermoplastic polyurethane and polyurethane foam.

The substrate is most preferably made from ethylene vinyl acetate copolymers and/or rubber.

The ethylene vinyl acetate copolymers are preferably those having low vinyl acetate content, e.g., Phylon, compression moulded EVA or die cut EVA.

The rubber is preferably one or more selected from: styrene-butadiene rubber, nitrile-butadiene rubber, thermoplastic rubber, natural rubber and ethylene-propylene-diene rubber.

The additional substrate is the same as or different from the said substrate.

### Method for Coating Article

The coating may be applying the composition B to the entire surface or only to one or more parts of the surface of the substrate.

The coating may be brush coating, dip coating, spray coating, roller coating, blade coating, flow coating, casting, printing or transfer printing, preferably brushing coating, dip coating or spray coating.

The coating should exclude use of radiation, which may result in premature reaction of the photoinitiators in the composition B or polymerization of the double bonds.

The heating and drying the substrate surface coated with composition B may refer to only heating and drying the substrate surface, but also refer to heating and drying part or all of the substrate including the substrate surface coated with composition B.

The heating and drying may remove volatile components, which may be water.

The heating and drying may be conducted via one or more means selected from: infrared thermal radiation, near infrared thermal radiation, microwaves and convection ovens or spray driers at elevated temperatures.

Generally, the higher the heating temperature is, the better. However, the termperature should never be higher than the threshold at which the substrate deforms in an uncontrolled manner or undergoes other damages.

The irradiating with actinic radiation is carried out when the temperature of the heated and dried substrate surface is no lower than 35 °C, and is most preferably carried out immediately after the heating and drying.

The irradiating the heated and dried substrate surface with actinic radiation may refer to only irradiating the heated and dried substrate surface, but also refer to irradiating part or all of the substrate including the heated and dried substrate surface.

The actinic radiation crystallizes and solidifies the composition B.

The actinic radiation may be UV radiation, solar radiation, radiation with the exclusion of oxygen under inert gas or oxygen-depleted gas or radiation by covering the parts to be radiated with media which are transparent to radiation, preferably UV radiation or solar radiation.

The inert gas is preferably nitrogen or carbon dioxide. The media which are transparent to radiation are preferably synthetic films, glass or liquids such as water.

The UV radiation or solar radiation may be performed with a medium- or high-pressure mercury vapor lamp. Optionally, the mercury vapor can be modified by doping with other elements such as gallium or iron. Laser, pulsed lamps, halogen lamps or excimer radiation means may also be used.

The actinic radiation is most preferably UV radiation. The UV radiation is most preferably a mercury radiation installed in a fixed location.

When the substrate has three-dimensional surfaces of complex shape, it is preferable to radiate using a plurality of radiation means, which should be suitably disposed such that the substrate surfaces receive a uniform radiation.

The actinic radiation may have a wavelength of 200 - 750 nm.

The dosage of the actinic radiation may be no less than 80 mJ/cm², preferably 80 - 5000 mJ/cm², further preferably 200 - 2000 mJ/cm² and most preferably 1250 - 1950 mJ/cm².

Within the above range, the higher the radiation dosage of the actinic radiation is, the better. However, the radiation dosage should never be higher than the threshold at which the substrate deforms in an uncontrolled manner or undergoes other damages.

The contact is preferably carried out before the temperature of the irradiated substrate surface has been lowered below the temperature that the composition B may bond, further preferably before the temperature of the irradiated substrate surface is no lower than 60 °C. The irradiated substrate surface preferably contacts with the substrate itself or an additional substrate in 1 hour, further preferably in 30 minutes, more preferably in 10 minutes and most preferably in 5 minutes, to give the coated article.

The additional substrate may be any substrate to be bonded.

The additional substrate may be the same as or different from the substrate.

The additional substrate preferably undergoes coating, heating and treatments with actinic radiation as the substrate.

The additional substrate preferably undergoes no treatments with primers, high-energy radiation or ozone before contacting with the irradiated substrate surface.

The high-energy radiation may be ionizing radiation, especially plasma.

The irradiated substrate surface may also undergo further thermal treatments after contacting with the substrate itself or the additional substrate.

The irradiated substrate surface may also undergo further cooling treatments after contacting with the substrate itself or the additional substrate, lowering the temperature of the coated article to room temperature.

After the step of irradiating with actinic radiation and before bringing the irradiated substrate surface into contact with the substrate itself or the additional substrate, heat may be further introduced to the irradiated substrate surface with actinic radiation. Methods for introducing heat may be one or more selected from: convection ovens or spray driers at elevated temperatures, infrared thermal radiation, near infrared thermal radiation, microwaves and heat transfer by the object contacting with the substrate coated with the composition B of the present invention.

After the step of irradiating with actinic radiation and before bringing the irradiated substrate surface into contact with the substrate itself or the additional substrate, preferably no heat is needed to be introduced to the irradiated substrate surface with actinic radiation.

### Coated Article

The coated articles may be shoes, sports items, furniture, textiles, foils and composites thereof, electronic products, automotive vehicles and internal parts thereof or aircrafts and internal parts thereof.

The coated products are preferably shoes, most preferably sports shoes.

### Examples

Unless defined otherwise, all the technical and scientific terms used herein have the same meanings as those commonly understood by those skilled in the art to which the present invention pertains. In the case that the definition of a term in the specification conflicts with that commonly understood by those skilled in the art to which the present invention pertains, the definition described herein controls.

Unless indicated otherwise, it is to be understood that all of the numerical values used in the specification and claims to express the amounts of ingredients, reaction conditions and the like are modified by the term "about". Therefore, unless indicated otherwise, the numerical parameters set forth herein are approximations capable to be altered as the desired properties obtained as necessary.

Unless indicated otherwise, the functionality of the present invention refers to average functionality.

The "and/or" as used herein refers to one or all of the elements mentioned.

The "include" or "including" and "comprise" or "comprising" as used herein cover both the cases with only the elements mentioned and the cases with other elements not mentioned in addition to those mentioned.

Unless indicated otherwise, all of the percentages in the present invention refer to percentage by weight.

Unless indicated otherwise, all of the analytical measurements of the present invention are carried out at 23 °C.

Viscosity is determined by a DV-II+Pro. rotary viscosimeter from the company Brookfield according to DIN 53019 at 23°C.

Solids content of the waterborne polyurethane dispersion is determined by a HS153 moisture tester from the company Mettler Toledo according to DIN-EN ISO 3251.

Isocyanate group (NCO) content (by volume) is determined according to DIN-EN ISO 11909.

Enthalpy of fusion of the polymer is determined by Calorimeter DSC-7 from the company Perkin-Elmer according to DIN 65467-A.

Dosage of the actinic radiation is determined by a UV Power Puck®II dosimeter from the company EIT Inc.

The actinic radiation equipment is a medium-pressure mercury radiation equipment doped with gallium from IST METZ UV Curing Equipment Trade (Shanghai) Co., Ltd. (Model: M-40-2x1-URS-TR-SS), wherein the UV lamp is M-400-NA-2-L type mercury lamp and the UV irradiation power is 120 W/cm.

### Raw Materials and Reagents

Dispercoll® U56: an anionic waterborne polyurethane dispersion, solids content: 50 ±1%, available from Covestro Co., Ltd., Germany.

Dispercoll® U2643: an anionic waterborne polyurethane dispersion, solids content: 40 ±1 %, available from Covestro Co., Ltd., Germany.

Dispercoll® U58: an anionic waterborne polyurethane dispersion, solids content: 50±1%, available from Covestro Co., Ltd., Germany.

Desmodur® DN: a hydrophilic aliphatic polyisocyanate based on HDI, isocyanate (NCO) content: 21.8 %, viscosity: 1250 mPa.s, available from Covestro Co., Ltd., Germany.

Borchi® Gel L 75 N: an aqueous solution with a concentration of 20 %, available from the company OMG, Germany.

SR833S: tricyclodecane dimethanol diacrylate, available from the company SARTOMER, used as the monomer which can polymerize by free radical polymerization.

Irgacure®500: available from the company BASF, Germany, used as the photoinitiator.

Ethyl Acetate: an analytically pure chemical reagent, available from Shanghai Lingfeng Chemical Reagent Co., Ltd.

B powder: trichloroisocyanuric acid, available from Zhong Bu (CENTRESIN) Adhesive & Chemical Co., Ltd.

EVA: an injection-molded EVA midsole, containing vinyl acetate copolymer, used as the substrate of the present invention.

Rubber: black shoe sole rubber made from NBR, based on OG RS 001, available from Dongguan Wantai Rubber Co., Ltd., used as the additional substrate.

### Pretreatment to EVA

A piece of cellulose cloth impregnated with ethyl acetate was used to wipe EVA surface for 5 times with a slight pressure. Then the EVA surface was placed in a well-ventilated position to dry.

### Pretreatment to Rubber

A piece of cellulose cloth impregnated with butanone was used to wipe rubber surface for 4 times gently. Then the rubber surface was placed in a well-ventilated position to dry. After that, a fine brush (Chinese hog hair brush) was used to apply ethyl acetate containing 2 wt% of B powder to the rubber surface which was then baked in an oven at 50 °C for 3 minutes.

### Determination of the Enthalpy of Fusion of Polymers of Dispercoll® U56 and Dispercoll® U2643

Dispercoll® U56 or Dispercoll® U2643 was cast into a Teflon mold, and then dried at room temperature for 7 days, to give a polymer film of Dispercoll® U56 or Dispercoll® U2643. A piece having a mass of 10 mg was cut out of the film and put into a DSC crucible which was then sealed. The crucible was put in the measurement cell of a calorimeter at room temperature and cooled to -100 °C. It was then heated three times in the temperature range from -100 °C to +100 °C. The heating rate was 20 K/min, and cooling was carried out at 320 K/min between the heating periods. The thermal coupling between the cooled block and the measurement cell was achieved by flushing with nitrogen while the measurement cell was cooled with a compressor. For Dispercoll® U56, a melting peak at 48.9 °C with an enthalpy of fusion of 58.0 J/g was found (from the first heating curve). For Dispercoll® U2643, no melting peak in 20 - 100 °C was found, i.e., the enthalpy of fusion was 0 J/g (from the first heating curve).

### Preparation of Compositions

### Composition 1

100g of Dispercoll® U56 was mixed with 10g of SR833S with vigorous stirring for 5 minutes. Then, 2 g of Irgacure® 500 was added, again with vigorous stirring. Then 12 g of soft water was added and stirred for another 5 minutes, after which the mixture was left to stand overnight to give composition 1.

### Composition 2

100 g of Dispercoll® U2643 was mixed with 10 g of SR833S and stirred vigorously for 5 minutes. Then, 2 g of Irgacure® 500 was added, again with vigorous stirring. After stirred for another 5 minutes, the mixture was left to stand overnight to give composition 2.

### Preparation of a Waterborne Heat-Activatable Adhesive

100.0 g of Dispercoll® U58 was mixed with 1.0g of Borchi® Gel L 75 N and stirred vigorously for 5 minutes. Then, 5.0 g of Desmodur® DN was added, again with vigorous stirring. After stirred for another 5 minutes, the mixture was left to stand for 30 minutes to give a waterborne heat-activatable adhesive with a viscosity of 5000 mPa.S, which should be used within 2.5 hours.

### Bonding Strength Test

The bonding strength of a product or article was tested using a tensile machine (Model: BZ2.5/TN1S) from the company ZWICK according to DIN EN 1392. The unbonded parts of the rubber and EVA were clamped to the upper and lower jaws of the tensile machine respectively. 180° peel of the bonding surface between the rubber and EVA was assessed with a tensile testing rate of 100 mm/min and a tensile testing length of 50 mm. If the test strip tore, peel strength was measured; if the bond was broken, the debonding strength was measured. Peeling of the test strip indicated a positive result while a broken bond of the test strip indicated a negative result compared with the peeling of the test strip.

### Example 1 Method for Manufacturing a Coated Product

Composition 1 was applied uniformly to an EVA substrate 2 cm wide and 10 cm long with a fine brush (Chinese hog hair brush) at 80 - 100 g/m² (wet weight). Then the EVA substrate coated with composition 1 was dried at 65 °C for 5 minutes in a circulating air oven. Immediately hereafter, it was irradiated with actinic radiation with a dosage of 1500 mJ/cm².

The waterborne heat-activatable adhesive was applied uniformly to a long rubber 2 cm wide and 10 cm long with a fine brush (Chinese hog hair brush) at approximately 120 g/m² (wet weight). Then the rubber coated with the waterborne heat-activatable adhesive was dried at 65 °C for 5 minutes in a circulating air oven.

Upon the temperature of the EVA surface coated with composition 1 reached 50 - 60 °C, it was brought into contact with the rubber surface coated with the waterborne heat-activatable adhesive and pressed in a flat press immediately for 30 seconds (by a flat press from Rongtai, China, with a pressure of 4 bar). The sample was then left to stand for 24 hours at room temperature, to give a coated product. The bonding strength of the product was measured and the result showed that the test strip tore with a peel strength of 4.62 N/mm.

### Example 2 Method for Manufacturing a Coated Article

Composition 2 was applied uniformly to a EVA substrate 2 cm wide and 10 cm long with a fine brush (Chinese hog hair brush) at 80 - 100 g/m² (wet weight). Then the EVA substrate coated with composition 2 was dried at 65 °C for 5 minutes in a circulating air oven. Immediately hereafter, it was irradiated with actinic radiation with a dosage of 1500 mJ/cm².

The waterborne heat-activatable adhesive was applied uniformly to a rubber 2 cm wide and 10 cm long with a fine brush (Chinese hog hair brush) at approximately 120 g/m² (wet weight). Then the rubber coated with the waterborne heat-activatable adhesive was dried at 65 °C for 5 minutes in a circulating air oven.

Upon the temperature of the EVA surface coated with composition 2 reached 50 - 60 °C, it was brought into contact with the rubber surface coated with the waterborne heat-activatable adhesive and pressed in a flat press immediately for 30 seconds (by a flat press from Rongtai, China, with a pressure of 4 bar). The sample was then left to stand for 24 hours at room temperature, to give a coated article. The bonding strength of the article was measured and the result showed that the bond was broken with a debonding strength of 1.98 N/mm.

### Comparative Example 1 Method for Manufacturing a Comparative Coated Product

Composition 1 was applied uniformly to a EVA substrate 2 cm wide and 10 cm long with a fine brush (Chinese hog hair brush) at 80 - 100 g/m² (wet weight). Then the EVA substrate coated with composition 1 was dried at 65 °C for 5 minutes in a circulating air oven. Immediately hereafter, it was irradiated with actinic radiation with a dosage of 1500 mJ/cm². Then the irradiated EVA substrate was heated at 65 °C for 5 minutes in a circulating air oven.

The waterborne heat-activatable adhesive was applied uniformly to a rubber 2 cm wide and 10 cm long with a fine brush (Chinese hog hair brush) at approximately 120 g/m² (wet weight). Then the rubber coated with the waterborne heat-activatable adhesive was dried at 65 °C for 5 minutes in a circulating air oven.

Upon the temperature of the EVA surface coated with composition 1 reached 50 - 60 °C, it was brought into contact with the rubber surface coated with the waterborne heat-activatable adhesive and pressed in a flat press immediately for 30 seconds (by a flat press from Rongtai, China, with a pressure of 4 bar). The sample was then left to stand for 24 hours at room temperature, to give a comparative coated product. The bonding strength of the comparative product was measured and the result showed that the test strip tore with a peel strength of 4.66 N/mm.

### Comparative Example 2 Method for Manufacturing a Comparative Coated Product

Composition 1 was applied uniformly to an EVA substrate 2 cm wide and 10 cm long with a fine brush (Chinese hog hair brush) at 80 - 100 g/m² (wet weight). Then the EVA substrate coated with composition 1 was dried at 65 °C for 5 minutes in a circulating air oven. Immediately hereafter that, it was irradiated with actinic radiation with a dosage of 1200 mJ/cm².

The waterborne heat-activatable adhesive was applied uniformly to a rubber 2 cm wide and 10 cm long with a fine brush (Chinese hog hair brush) at approximately 120 g/m² (wet weight). Then the rubber coated with the waterborne heat-activatable adhesive was dried at 65 °C for 5 minutes in a circulating air oven.

Upon the temperature of the EVA surface coated with composition 1 reached 50 - 60 °C, it was brought into contact with the rubber surface coated with the waterborne heat-activatable adhesive and pressed in a flat press immediately for 30 seconds (by a flat press from Rongtai, China, with a pressure of 4 bar). The sample was then left to stand for 24 hours at room temperature, to give a comparative coated product. The bonding strength of the comparative product was measured and the result showed that the bond was broken with a debonding strength of 4.15 N/mm.

When comparing example 1 with comparative example 1, it was observed that with the same radiation dosage, i.e., 1500 mJ/cm², omitting a heating step before bringing EVA into contact with rubber and bonding, the bonding strength of the coated product of example 1 was better, comparable to that of comparative example 1 with the heating step. When comparing example 1 with comparative example 2, it was observed that with a radiation dosage of 1200 mJ/cm² and omitting a heating step before bringing EVA into contact with rubber and bonding, the bonding strength of the product deteriorated substantially. Therefore, it demonstrated that a product with good bonding strength can be achieved by selecting a suitable dosage of actinic radiation, without an additional heating step before bringing EVA into contact with rubber and bonding.

It will be obvious to those skilled in the art to which the present invention pertains that the present invention is not merely limited to the aforementioned specific details and may be practiced as other specific forms without departing from the spirit or primary characteristics of the present invention. Therefore, the examples should be deemed as exemplary instead of restrictive from any perspective and the scope of the present invention is indicated by the Claims other than the Description; and therefore, any change should be considered to be included in the present invention as long as it falls within the meaning and scope of the equivalents of the Claims.

## Claims

1. A method for manufacturing a coated product, comprising the following steps:
(S1) coating at least one surface of a substrate with a composition A comprising a polymer A, a compound which can polymerize by free radical polymerization, a photoinitiator and optional water, the amount of the polymer A is no less than 50 wt%, based on that the solids content of the composition A is 100 wt%, the polymer A being one or more selected from: polyurethane, polyurea and polyurethane polyurea;
(S2) heating and drying the substrate surface coated with the composition A;
(S3) irradiating the heated and dried substrate surface with actinic radiation, the dosage of the actinic radiation is between 1250 mJ/cm² and 1950 mJ/cm²; and
(S4) bringing the irradiated substrate surface into contact with the substrate itself or an additional substrate, to give the coated product.

2. The method according to Claim 1, **characterized in that**, the polymer A has an enthalpy of fusion of more than 3 J/g at 20 - 100 °C, obtained by measuring the first heating curve at a heating rate of 20 K/min by DSC according to DIN 65467.

3. The method according to Claim 1, **characterized in that**, the substrate coated with the composition A undergoes no treatments with primers, high-energy radiation or ozone.

4. The method according to Claim 1, **characterized in that**, the substrate may be made from one or more materials selected from: ethylene vinyl acetate copolymers, rubber, polyolefins, thermoplastic polyurethane and polyurethane foam.

5. The method according to Claim 1, 3 or 4, **characterized in that**, the additional substrate is the same as or different from the substrate.

6. The method according to Claim 1, **characterized in that**, the irradiation is carried out when the temperature of the heated and dried substrate surface is no lower than 35 °C, and is most preferably carried out immediately after the heating and drying.

7. The method according to Claim 1, **characterized in that**, no heat is needed to be introduced to the substrate surface irradiated with actinic radiation before bringing the irradiated substrate surface into contact with the substrate itself or the additional substrate.

8. A coated product prepared by performing the method according to any one of Claims 1-7.

9. A method for manufacturing a coated article, comprising the following steps:
(S1) coating at least one surface of a substrate with a composition B comprising a polymer B, a compound which can polymerize by free radical polymerization, a photoinitiator and optional water, the amount of the polymer B is no less than 50 wt%, based on that the solids content of the composition B is 100 wt%, the polymer B being one or more selected from: polyurethane, polyurea and polyurethane polyurea; the polymer B having an enthalpy of fusion of no more than 3 J/g at 20 - 100 °C, obtained by measuring the first heating curve at a heating rate of 20 K/min by DSC according to DIN 65467;
(S2) heating and drying the substrate surface coated with the composition B;
(S3) irradiating the heated and dried substrate surface with actinic radiation, and
(S4) bringing the irradiated substrate surface into contact with the substrate itself or an additional substrate, to give the coated article.

10. The method according to Claim 9, **characterized in that**, the substrate may be made from one or more materials selected from: ethylene vinyl acetate copolymers, rubber, polyolefins, thermoplastic polyurethane and polyurethane foam.

11. The method according to Claim 9, **characterized in that**, the dosage of the actinic radiation is between 1250 mJ/cm² and 1950 mJ/cm².

12. The method according to Claim 9 or 10, **characterized in that**, the additional substrate is the same as or different from the substrate.

13. The method according to Claim 9, **characterized in that**, the irradiation is carried out when the temperature of the heated and dried substrate surface is no lower than 35 °C, and is most preferably carried out immediately after the heating and drying.

14. The method according to Claim 9, **characterized in that**, no heat is needed to be introduced to the substrate surface irradiated with actinic radiation before bringing the irradiated substrate surface into contact with the substrate itself or the additional substrate.

15. A coated article prepared by performing the method according to any one of Claims 9-14.
